Europäisches Patentamt

European Patent Office

Office européen des brevets

(11) Publication number: **0 166 277**
A2

# (12) EUROPEAN PATENT APPLICATION

(21) Application number: 85106953.4

(22) Date of filing: 05.06.85

(51) Int. Cl.⁴: **B 65 B 35/26**, B 65 B 57/14

(30) Priority: 28.06.84 IT 1522084 U

(43) Date of publication of application: 02.01.86
Bulletin 86/1

(84) Designated Contracting States: **AT BE CH DE FR GB LI LU NL SE**

(71) Applicant: **CARLE & MONTANARI S.p.A., Via Groce Coperta 14, I-40128 Bologna (IT)**

(72) Inventor: **Salicini, Sandro, Via Murri 63, I-40137 Bologna (IT)**

(74) Representative: **Porsia, Attilio et al, c/o Succ. Ing. Fischetti & Weber Via Caffaro 3, I-16124 Genova (IT)**

(54) **Delicate articles feeding device.**

(57) The device comprises a rotating circular disc (A) having a crown of recesses (C) spaced along its circumference for receiving the articles (K) which are orderly distributed by means of the distributor dish (G). Around the periphery of said disc (A) there are provided: (a) Nozzle means (1), for directing air jets (X) in radial direction, from the periphery of the disc (A) toward its center, or in substantially tangential directions against the articles (K) protruding from said recesses (C); feeler means (4) downstream of said nozzle means (1) for detecting the presence of articles (K) seated in non-correct manner in the recesses (C); and ejecting nozzle means (6) downstream of the said feeler means (4), the flow of air to which is controlled by the said feeler means (4), for ejecting from the recesses (C) the irregularly seated articles (K) detected by the said feeler means (4).

## Delicate articles feeding device.

The present invention relates to an article feeding device, and more particularly to a device for feeding jelly or soft candies, or the like delicate articles, to a wrapping machine.

Article feeding devices of the kind to which the present invention refers are know, for instance from US-A-4.379.504 to Sandro Salicini, in which a device is shown comprising a horizontal circular singling disc, which rotates continuously or intermittently and presents a peripheral crown of recesses acting as receiving pockets for, for instance, candies. The surface of the singling disc is subdivided into a first, larger candy-receiving portion acting as feed reservoir for the candies which are fed at random thereinto, delimited by a fixed circumferential side wall extending over a circumferential arc around the periphery of the singling disc, and by a fixed partition wall extending across the surface of the singling disc, and into a second smaller candy-delivery portion lying outside of the feed reservoir. At the interior of the feed reservoir, covering a substantial portion of the singling disc, there is mounted a distributor dish shaped like an asymmetrical flat or truncated cone.

The said distributor dish is caused to perform rotary oscillations parallel to the surface of the singling disc, around an oscillation axis which coincides with the axis of rotation of the singling disc. In this manner the candies fed into the feed reservoir are gently stirred so as to avoid clogging and permit easy and proper accomodation in the respective receiving pockets.In this known prior art device, means are provided in form of a brush roller, for brushing off the excess candies, i.e the candies which have been housed only partially in the receiving pockets of the device, and broken or anomalous candies.

The use of such a brush roller is however unsuitable whenever handling very delicate articles, like jelly or soft candies, or fruit gelatines, which oviously cannot be subjected to the action of such a roller, on pain of breaking them.

It is therefore the main object of the present invention to provide, in a device of the above mentioned kind, means allowing the handling of very delicate articles, as for instance jelly candies, soft candies or fruit gelatines.

According to one feature of the invention, this is accomplished by arranging, peripherally of the said singling disc, a number of nozzles connected to a compressed air source, which nozzles are set at such a level and with such an orientation as to provide an air flow jet impinging on the articles which are not correctly positioned in the receiving pockets of the disc, so as to either position same correctly in the said pockets, or to eject them out from the said pockets, pushing them toward the central feeding section of the disc, so as to recirculate same.

According to a further feature of the present invention, feeling means are provided downstream of the said nozzles for detecting the presence of irregularly protruding articles from the said pockets, and for controlling the actuation of suitable air nozzles ejecting the said defective articles from said pockets in the disc.

Further objects and features of the invention and the advantages deriving therefrom will appear from the following description of a preferred embodiment of the invention, shown by way of non-limiting example in the annexed drawings, in which:

Figure 1 is a diagrammatic top plan view of one embodiment of the articles feeding device according to the invention.

Figure 2 shows in enlarged scale and in section along line II-II, some constructional details of the device of Figure 1.

Figure 3 is a detail in enlarged scale, sectioned along line III-III of Figure 1, of a modified embodiment of the device according to the invention.

Figure 4 is a top plan view of the particular shown in Figure 3;

Figure 5 is a side view, in enlarged scale, partially sectioned along line V-V of Figure 1,of some details of the device according to the invention.

With reference to the drawings, the article feeding device shown comprises, in a manner per se known, a horizontal circular singling disc A, which is secured at its center to a vertical shaft B. The shaft B is driven, through any suitable driving means (not shown), in continuous or intermittent motion in the direction of the arrow F1, and consequently it promotes the rotation of the singling disc A in the same direction. In its peripheral zone, the singling disc A presents a circular crown of through recesses C, concentrical to the driving shaft B, each of the recesses C forming the receiving pocket for a candy to be processed, and being closed at the bottom by a fixed support ring P.

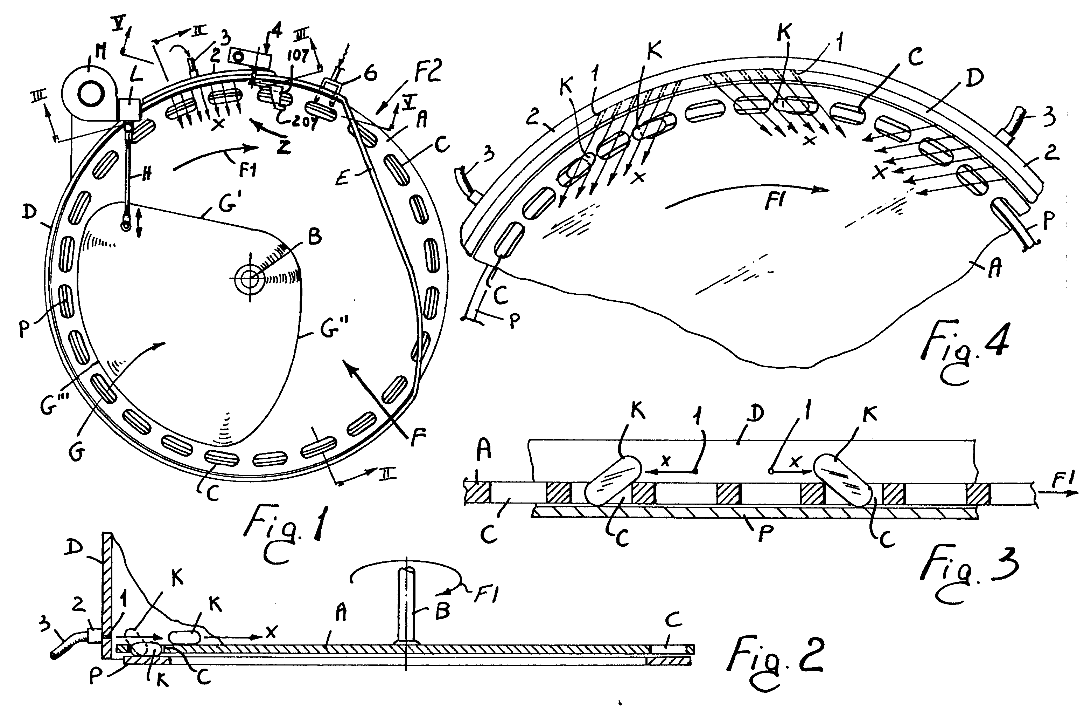

Around a portion of the circular singling disc A there is arranged a fixed side wall D, in the shape of a circumferential arc. The ends of the side wall D are connected to one another by a partition wall E, which extends across the singling disc A as a chord of shape. In this manner, the surface of the singling disc A is divided into a larger receiving portion (at the left in Fig.1)delimited by the side wall D and by the partition wall E, and into a remaining, smaller, delivery portion (at the right in Fig. 1).

In this manner, the side wall D and the partition wall E define a flat reservoir, (shown by arrow F) the bottom of which is constituted by the receiving portion of the singling disc A. The delivery portion of the singling disc A is located outside of the said feed reservoir.

The singling disc A, in its receiving portion, is partially covered by a distributor dish G, which presents in section an asymmetrical cone or truncated-cone shape. The said distributor dish G is arranged in a rotatable manner on the upper end of shaft B. However the said distributor dish G is not entrained into rotation by the driving shaft B, but is caused to perform rotary oscillations around the said shaft B, parallel to the suface of the singling disc A.

For this purpose, the distributor dish G is connected at a point eccentric to the shaft B, by means of a reciprocating rod H to a driving sleeve L , which is rotatably mounted on an eccentric portion of the driving shaft of motor M. Of course, the said eccentric drive can be imparted also by cam means. Means can be provided for the adjustment of the amplitude of the rotary oscillations of the distributor dish G.

The peripheral portion G'" of the asymmetrical-cone shaped distributor dish G which is remotest from the driving shaft B has a circular arc shape,concentric to the shaft B, and extends along the inner periphery of the crown of receiving pockets C, at a short distance therefrom. The diametrally opposite section of the distributor dish G is located near the shaft B and is connected to the extremities of the said remotest arc shaped peripheral portion by two edge portions G' and G" which may be straight or slightly curved, and which are somewhat radially disposed with respect to the singling disc A. Thus the distributor dish G presents, in top plan view, approximately the shape of a sector having as arc the section G'" and as radii the edge portions G' and G". The edge portion G" which is located upstream in terms of direction of rotation (arrow F1) of the singling disc A, is preferably convex, while the other edge portion G' is preferably concave.

Downstream of the dish G, in the direction of the arrow F1, in the side wall D a plurality of through bores 1 of small diameter are formed at right angles to the inner side of the wall D. The said bores 1 are oriented toward the center of the disc A, are equispaced from one another at a distance, for instance, of few millimeters, and are arranged over a same ideal horizontal plane, parallel to the plane of the disc A, at a level which is slightly higher than the upper face of said disc A.

The said bores 1 are connected at their rear ends to a manifold 2, which is connected to a pipe 3, which in turn is connected to a suitable compressed air source (not shown).

Downstream of the said bores 1, a feeling device 4 is provided. As best shown in Figure 5, the device 4 comprises a stationary box 9 .In the box 9 the pivot pin 8 is rotatably journaled. A lever arm 7 is secured at one end to the pin 8 and projects, through a suitable slit in box 9, outwardly from said box, downwardly toward the upper surface of the disc A, substantialy in the path of the pockets C. To the free end of said lever arm 7 a blade like element 107 is secured, the said element 107 extending substantially across the whole width of the pockets C, and being provided at one, or both sides with downwardly turned fingers or appendices 207 protruding sidewise of the pockets C, up or very close to the upper surface of the disc A.

To the pin 8 also the lever arms 10 and 12 are secured by one end.

The lever arm 12 extends inside of box 9 upwardly from the pin 8, up to the level of a side abutment member 14. The lever arm 12 is held into abuting contact with the abutment 14 by the action of the spring 13 which is guided on a spindle secured to the box 9.

The lever arm 10 extends inside of the box 9 sidewise from the pin 8 and it cooperates with the proximity switch 11, carried by the box 9. The switch 11 is electrically connected to an interface unit 15, which in turns controls the electrovalve 5, for the purposes which will be described later.

Downstream of the feeling device 4, in the direction of arrow F1, an ejecting station is provided in the path of the pockets C. The said station comprises a set of nozzles 6, which are disposed below the pockets C, so as to provide, whenever actuated, an air jet impinging from below against the lower face of the objects housed in the pockets C, with such a force as to expell the said objects out of the concerned pockets. The flow of the compressed air to the nozzles 6 is controlled by the electrovalve 5, which in turn is controlled by the feeling device 4.

The operation of the described device will be evident.

The candies K to be wrapped are discharged at random, for example by means of a discharge chute (not shown) in the direction of the arrow F inside the feed reservoir defined by the side wall D and by the partition wall E. As a result of the continuous or intermittent rotary motion of the singling disc A and the rotary oscillation of the distributor dish 1 around the common shaft B, the candies K are caused to move and maintained in motion, until they fall into the respective receiving pockets C of the singling disc A. The candies K in the pockets C are thereafter transferred in front of the nozzles 1 by the rotation of the disc A. The flow X of compressed air flowing out of nozzles 1 , due to its orientation, location and physical properties, has no effect on the candies K that are correctly seated into the pockets C, while the candies K which projects out of these pockets, or that are not seated at all in said pockets, are affected by the said flow and are either constrained to seat properly into the pockets C, or are removed therefrom and are delicately pushed toward the center of the disc A, from which they are recirculated without becoming damaged.

Thereafter, the candies K seated in the pockets C are trasferred beneath the feeler device 4. The candies which are properly seated in the pockets C will not interfere with the feeler blade 107, which is spaced from the disc A by a distance such as to permit the free passage beneath said blade 107 of the correctly seated candies. If there is some candy which is not correctly seated in its pocket C, and for instance a candy protruding upwardly or sidewise from its pocket C, same will cause, by passing beneath the blade 107 (or beneath the side arms 207 of blade 107) to lift said blade. This causes in turn the lowering of the lever arm 10 to the position shown in dotted lines in Figure 5, thus actuating the switch 11 which, through the interface unit 15, will energize the electrovalve 5, controlling the flow of compressed air to the nozzles 6. This flow of compressed air impinging on the candies K from below, will eject same out of their pockets C.

The single candies K which have been properly received and housed in the receiving pockets C, and which are sustained during their movement by the support ring P, pass under the partition wall E and reach the delivery zone of the singling disc A, where they are removed in any convenient manner from the receiving pockets C, by suitable means for further processing, e.g.,wrapping.

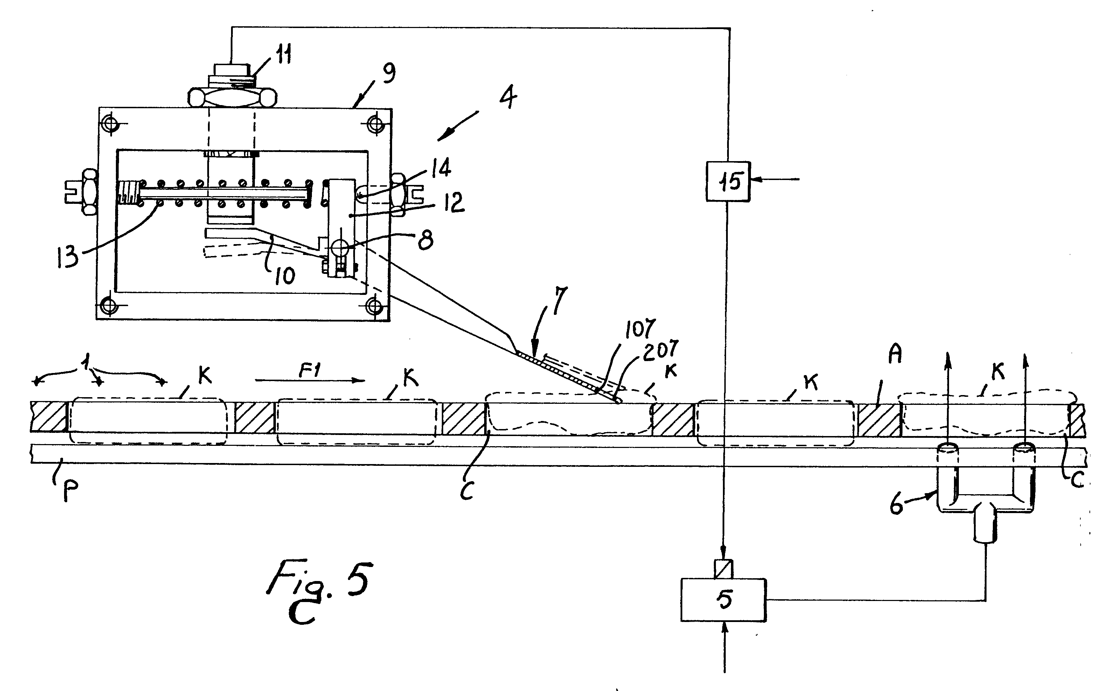

In Figure 4 a modified embodiment of the invention is shown, which is particularly suitable in all those instances in which the candies are not correctly positioned longitudinally in the pockets C, as for instance shown in Figure 3. In this case, it should be necessary in order to exert an efficient action also on this candies, that the air jets X will attain the candies longitudinally or substantially longitudinally, and will first hit on their ends which protrudes from the pockets C.

This condition may be attained, as shown in Figure 4, by orienting the bores 1 with a certain inclination with respect to the tangent to the wall D, whereby the path of the air flowing out of these bores will be partly concordant with, and partly opposite to the direction of rotation of the feeding disc A. In order to avoid any interference between the air flows flowing out of the bores 1, provision can be made for the said bores to be divided into groups, and to these groups to be set in a divergent or suitably spaced apart relation, as shown in Figure 4. Since the action exerted by the air flowing out from bores 1 is useful also for inducing the candies to correcly get into the pockets C, the groups of bores 1 oriented in two different directions, can be provided also in the section of the wall D which is facing the edge G"' of the dish G.

<u>CLAIMS</u>

1) A device for feeding delicate articles (K) in orderly succession for further processing, comprising a rotating, horizzontally disposed circular disc (A) having a crown of recesses (C) spaced along its circumference for receiving said articles (K);the surface of said disc (A) being subdivided into a larger receiving portion enclosed by a fixed circumferential wall element (D) extending along the periphery of said disc (A), and a fixed partition wall (E) extending across the interior of said disc (A), and a smaller delivery portion located outside of the said receiving portion; a distributor dish (G) of generally conical shape which covers a portion of said circular disc (A), said dish (G) being driven in a rotary oscillating path in a plane parallel to the surface of said disc (A) about a vertical axis (B), characterized by the fact that nozzle means (1) are provided, connected to a suitable compressed air source, for directing air jets (X) against the said articles (K) in the said recesses (C) in order to cause them to exactly seat in their recesses (C), or to be pushed again back in the receiving portion of the disc (A), so as to be recirculated, if they are not properly seated in their recesses (C).

2) A device according to claim 1, characterized by the fact the said nozzles (1) are positioned so as to direct the said air jets (X) in a plane substantially parallel to the plane of the said disc (A) at a level corresponding to the upper level occupied by the articles (K) properly seated in the said recesses (C), in a radial and/or in a tangential or sub- tangential direction concord with, or opposite to, the direction of rotation of said disc (A).

3) A device according to claims 1 and 2, characterized by the fact that it comprises feeling means (4) for detecting the presence of any article (K) protruding in an irregular manner from a recess (C) in the disc '(A), and for controlling the operation of an article ejecting device.

4) A device according to claim 3, characterized by the fact that the said article-ejecting device comprises nozzle means (6) mounted, downstream with respect to the said nozzles (1) in the direction of rotation of the disc (A), beneath said disc (A) in the path of the said recesses (C) and positioned so as to direct their air jets against the lower surface of said articles (K) so as to eject them out of their recesses.

5) A device according to claim 3, characterized by the fact that the said feeling means (4) comprises a detecting lever(7,107,207) extending in the path of the said crown or recesses (C), actuating means (10) associated to said lever (7) for the actuation of switch means (11), controlling the flow of compressed air to the said ejecting nozzles (6).

Fig. 1

Fig. 2

Fig. 3

Fig. 4

1/2

0166277

Fig. 5